# EUROPEAN PATENT APPLICATION

(11) **EP 4 302 862 A1**
(43) Date of publication of application: **10.01.2024**
(21) Application number: 22183244.7
(22) Date of filing: 06.07.2022
(51) Int. Cl.: B01D 53/94, B01J 23/63, B01J 29/74, B01J 35/00, B01J 35/04, F01N 3/08

(54) **LEAN NOX TRAP**

(71) Applicant: Johnson Matthey Public Limited Company, London EC4A 4AB (GB)
(72) Inventor: BIDAL, Yannick, Royston, SG8 5HE (GB); CASTANON RODRIGUEZ, Alba, Royston, SG8 5HE (GB); CHIFFEY, Andrew Francis, Royston, SG8 5HE (GB); COOPER, Oliver, Royston, SG8 5HE (GB); GAYS, Sofia, Billingham, TS23 1LB (GB); LASTRA-CALVO, Nuria, Royston, SG8 5HE (GB); MOREAU, Francois, Royston, SG8 5HE (GB)
(74) Representative: Armstrong, Emily

(57) **Abstract**

The present invention relates to an improved article that is optimised for treating HC, CO and NO, and has good NOx storage capacity, particularly at low temperatures. The invention further relates to an exhaust gas treatment system comprising the article, a system comprising an engine and said exhaust gas treatment system, and a method for the treatment of an exhaust gas.

## Description

The present invention relates to an improved article that is optimised for treating HC, CO and NO, and has good NOx storage capacity, particularly at low temperatures.

Internal combustion engines produce exhaust gases containing a variety of pollutants, including hydrocarbons (HCs), carbon monoxide (CO), and nitrogen oxides ("NOx"). Emission control systems, including exhaust gas catalytic conversion catalysts, are widely utilized to reduce the amount of these pollutants emitted to atmosphere. For compression-ignition (i.e., diesel) engines, the most commonly used catalytic converter is the diesel oxidation catalyst (DOC). DOCs typically contain palladium and/or platinum, generally supported on alumina. This catalyst converts particulate matter (PM), hydrocarbons, and carbon monoxide to carbon dioxide and water.

In modern exhaust systems, the DOC is used during normal operation to control these CO and HC emissions. The DOCs role in the passive oxidation of HC, CO and NOx present in the exhaust gas flow occurs throughout the operation of the engine and is optimised for the operating window of the DOC between about 250 and 300°C. The DOC can also be used to promote the conversion of NO to NO₂ for downstream passive filter regeneration (the combustion of particulate matter held on a filter in NO₂ at lower exhaust gas temperatures than in O₂ in the exhaust gas, i.e. the so-called CRT^{®} effect).

In addition, the DOC may be used as an exotherm generation catalyst. This is performed via injection of hydrocarbon fuel into exhaust gas. For the avoidance of doubt, the fuel injection/exotherm generation event does not take place during normal operation: normal operation is considered to be the period between fuel injection/exotherm generation events. The second role for exotherm generation can serve one of several purposes. For example, the exotherm can be generated to combust soot on downstream filters when an unacceptable increase in back pressure is detected. Another example is for the regeneration of SCR catalysts, such as by removing sulphur from downstream CuCHA SCR catalysts.

In order to generate these exotherms an amount of hydrocarbon (HC) is injected upstream of the DOC (~2000ppm). Provided that the DOC is hot enough, the added HC will lead to the production of an exotherm, heating the exhaust gases and, consequently, heating those downstream components (up to temperatures of around 500°C). If the DOC is not hot enough then it is necessary through engine management to provide a hotter exhaust from the engine with an associated energy and performance impact.

Another known component for exhaust gas treatment systems are so-called lean NOx traps (LNTs). Their cleaning effect is based on the fact that, in a lean operating phase of the engine, the nitrogen oxides are stored by the storage material of the storage catalysts predominantly in the form of nitrates, and these oxides are decomposed again in a subsequent rich operating phase of the engine, and the nitrogen oxides released in this manner are converted into nitrogen, carbon dioxide, and water with the reducing exhaust gas components on the storage catalyst. This operating principle is described in, for example, SAE document SAE 950809.

As storage materials, oxides, carbonates, or hydroxides of magnesium, calcium, strontium, barium, alkali metals, rare earth metals, or mixtures thereof come, in particular, into consideration. As a result of their alkaline properties, these compounds are able to form nitrates with the acidic nitrogen oxides of the exhaust gas and to store them in this way. They are deposited with the highest possible dispersion on suitable carrier materials in order to generate a large interaction surface with the exhaust gas. As a rule, nitrogen oxide storage catalysts also contain precious metals, such as platinum, palladium, and/or rhodium as catalytically active components. Their task is, on the one hand, to oxidize NO to NO₂, as well as CO and HC to CO₂, under lean conditions and, on the other hand, to reduce released NO₂ to nitrogen during the rich-operating phases, in which the nitrogen oxide storage catalyst is regenerated. Modern nitrogen oxide storage catalysts are described, for example, in EP0885650A2, US2009/320457, WO2012/029050A1, and WO2016/020351A1.

In a passive NOx absorber system (also known as a PNA), the catalyst adsorbs NOx during vehicle cold start and release it when the exhaust temperature increases-without a rich regeneration-to be converted over a downstream NOx reduction catalyst. Passive nitrogen oxide storage catalysts can be used to store nitrogen oxides, particularly at temperatures below 200° C., at which an SCR catalyst has not yet reached its operating temperature, and to release them again as soon as the SCR catalyst is ready for operation. Through the intermediate storage of the nitrogen oxides emitted by the engine below 200° C. and their concerted release above 200° C., an increased total nitrogen oxide conversion of the exhaust gas aftertreatment system can thus be realized. Palladium supported on cerium oxide has been described as a passive nitrogen oxide storage catalyst (see for example WO2008/047170A1 and WO2014/184568A1), which can also be coated on a particle filter according to WO2012/071421A2 and WO2012/156883A1.

US2021252456 provides a discussion of a modern nitrogen oxide storage catalyst.

It is an object of the invention to provide an improved article having optimised HC, CO and NO treatment properties and good NOx storage capacity, particularly at low temperatures, to tackle problems associated with the prior art and/or to at least provide a commercially viable alternative thereto.

According to a first aspect there is provided an article, for the treatment of exhaust gases, having an inlet-end front zone and an outlet-end rear zone and comprising a substrate coated with a zoned and layered catalyst, the catalyst comprising:
(i) a lower layer, on the substrate, comprising Platinum and Palladium, and an alumina support;
(ii) a middle layer, on the lower layer, comprising Platinum and Palladium, a ceria support and a NOx storage component;
(iii) an upper layer, on the middle layer, comprising a downstream portion in the outlet-end rear zone, comprising Platinum and an alumina support, and, optionally, an upstream portion in the inlet-end front zone, comprising Palladium and an alumina support;
   wherein the inlet-end front zone of the catalyst comprises a large pore zeolite and wherein the outlet-end rear zone of the catalyst is substantially free from any large pore zeolite.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The Inventors have found that it is possible to provide a hybrid catalyst optimised for both DOC and LNT performance. In particular, the configuration of the catalyst as described herein is able to ensure good efficient NOx storage at low temperature, which helps to store NOx on a cold start. However, it also does not have too much NOₓ storage at higher temperatures, so that the NOx releases thermally to be converted to N₂ by a downstream SCR system.

The inventors have found that these characteristics can be obtained with the configuration of a catalyst as described herein while still maintaining reasonable oxidation performance after running for some time at high lean temperatures. That is, introducing the PNA performance using the described configuration does not compromise the general DOC performance.

It also ensures low HC slip at cold temperatures due to the upfront zeolite. In use, an engine starts cold and the zeolite starts to store slipped HC. The NOx storage component (such as CeNd) and the alumina in the front zone start to store NOx. As the engine gets hotter, the storage of these components decreases and the PGMs start to oxidise these components to CO₂ and NO₂. The inventors found that it was important that the zeolite should not be placed along the whole length, since it had an adverse impact on the NO oxidation performance.

It also has good performance after a rich activation step. That is, the inventors have found that the general performance of the PGM on ceria starts to decline after a while under lean conditions, so there is desirably a brief rich purge to reactivate. This involves adding more HC to the exhaust. This regenerates the catalyst by removing oxygen stored on the ceria. The claimed configuration is able to readily regenerate performance after such a step.

The present invention relates to an article, for the treatment of exhaust gases. In more detail, the present invention relates to a method for the manufacture of an article for the treatment of exhaust gases. The article can be in the form of a catalyst article. By a catalyst article it is meant a single component for an exhaust gas treatment system. These are also sometimes referred to as "bricks".

The method comprises providing a carrier substrate. This is the surface onto which catalyst layers are subsequently applied and on which they are supported.

Preferably the substrate is a flow-through monolith. The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. The first face is typically at an inlet end of the substrate and the second face is at an outlet end of the substrate. For the avoidance of doubt, a flow-through monolith substrate is not a wall flow filter.

The channels may be of a constant width and each plurality of channels may have a uniform channel width. Preferably within a plane orthogonal to the longitudinal direction, the monolith substrate has from 300 to 900 channels per square inch, preferably from 400 to 800. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the substrate described herein is a single component (i.e. a single brick), nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present invention comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The article has an inlet-end front zone and an outlet-end rear zone. The length of these zones is defined by the coatings applied to the substrate. That is, the composition of the front zone is different to the composition of the rear zone, based on compositional changes in the lower, middle and upper layers.

Preferably the inlet-end front zone extends from 40 to 60% of a length of the substrate from the inlet end, and/or, wherein the outlet-end rear zone extends from 40 to 60% of a length of the substrate from the outlet end. More preferably the inlet-end front zone extends from 45 to 55% of a length of the substrate from the inlet end, and/or, wherein the outlet-end rear zone extends from 45 to 55% of a length of the substrate from the outlet end. Most preferably the inlet-end front zone extends about 50% of a length of the substrate from the inlet end, and/or, wherein the outlet-end rear zone extends about 50% of a length of the substrate from the outlet end.

The substrate is coated with a zoned and layered catalyst. A layered catalyst is one which is formed from a plurality of layers stacked one on top of another. A zoned catalyst is one in which there are different portions of the catalyst along a length of the substrate. Hence, a zoned and layered catalyst is a catalyst with compositionally distinct regions in both an axial and a perpendicular direction, relative to the substrate.

The catalyst comprises a lower layer, on the substrate, comprising Platinum and Palladium, and an alumina support. The lower layer can be directly on the substrate, i.e. there are no intervening layers between the lower layer and the substrate. The PGM loadings are preferably in total amount of Pd and Pt of from 5 to 130g/ft³, preferably from 20 to 120g/ft³ e.g. from 30 to 110 g/ft³, from 40 to 100 g/ft³, from 50 to 95 g/ft³ or from 60 to 80 g/ft³. Preferably the lower layer comprises Pt and Pd in a ratio of from 1:1 (Pt:Pd) to 20:1, more preferably from 2:1 to 18:1, from 3:1 to 15:1, from 4:1 to 10:1, from 5:1 to 8:1 or from 6:1 to 7:1.

The alumina support may be any form of alumina, (e.g. alpha, theta or gamma alumina), but preferably comprises gamma alumina due to its improved thermal durability. The alumina may be doped with a dopant to improve performance, such as Er, Pr, Ce, Si or La, preferably Si or La. Amounts of dopants are typically from 0.1 to 15wt%, preferably from 1 to 7wt% and most preferably about 5wt%. Preferably the alumina support in the lower layer is alumina doped with lanthanum. This improves the NOx storage performance.

Preferably the lower layer further comprises ceria, preferably in both the inlet-end front zone and an outlet-end rear zone. The ceria may comprise a small amount, such as up to 20wt% of another element, such as zirconia. Such mixed oxides are well known in the art. Suitable amounts of ceria in the lower layer are from 0.5 to 6g/in³, more preferably from 2 to 4g/in³. This helps with NOx storage. Furthermore, when doing rich purge this facilitates activation and helps the activated DOC performance.

The catalyst comprises a middle layer, on the lower layer, comprising Platinum and Palladium, a ceria support and a NOx storage component. The middle layer can be directly on the lower layer, i.e. there are no intervening layers between the middle layer and the lower layer. Preferably the NOx storage component comprises one or more of Ba, Nd and La, preferably the NOx storage component comprises Nd and/or La. Suitable amounts of NOx storage component are from 50 to 600g/ft³, more preferably from 200 to 400g/ft³. The ceria support may comprise a small amount, such as up to 20wt% of another element, such as zirconia. Such mixed oxide supports are well known in the art. Suitable amounts of ceria support are from 0.5 to 6g/in³, more preferably from 2 to 4g/in³. Examples of ceria supports include pure ceria and pre-aged ceria, e.g. C100N, C100S and HSA20.

The catalyst comprises an upper layer, on the middle layer, comprising a downstream portion in the outlet-end rear zone, comprising Platinum and an alumina support. The upper layer can be directly on the middle layer, i.e. there are no intervening layers between the upper layer and the middle layer. Preferably the downstream portion extends along the entire length of the outlet-end rear zone. Preferably the alumina support in the downstream portion of the upper layer is undoped alumina. This is because undoped alumina can act as a NOx trap after a rich purge and plain alumina is then best for NO oxidation.

The catalyst optionally comprises an upstream portion in the inlet-end front zone, comprising Palladium and an alumina support. Preferably, when present, the upstream portion extends along the entire length of the inlet-end front zone.

The inlet-end front zone of the catalyst comprises a large pore zeolite. The term "zeolites" here also includes molecular sieves, which are sometimes also referred to as "zeolite-like" compounds. Molecular sieves are preferred if they belong to one of the aforementioned structure types. Examples include silica aluminium phosphate zeolites, which are known by the term "SAPO," and aluminium phosphate zeolites, which are known by the term "AIPO." Preferred zeolites are also those that have a SAR (silica-to-alumina ratio) value of 2 to 100, in particular of 5 to 50.

The large pore zeolite may have a framework structure represented by a Framework Type Code (FTC) selected from the group comprising (e.g. consisting of) AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. The large pore zeolite can have a framework structure selected from the group comprising (e.g. consisting of) AFI, BEA, MAZ, MOR, and OFF. The large pore zeolite can have a framework structure selected from the group comprising (e.g. consisting of) BEA, MOR and FAU. When the large pore molecular has a framework structure of BEA, FAU or MOR, then the zeolite may be a beta zeolite, faujasite, zeolite Y, zeolite X or mordenite.

Preferably the large pore zeolite includes or consists of Beta zeolite. The outlet-end rear zone of the catalyst is substantially free from any large pore zeolite. Preferably the outlet-end rear zone of the catalyst is substantially free from any zeolite. By substantially free, it is meant that there is no intentionally added zeolite material. Nonetheless, it should be appreciated that some trace zeolite material may migrate between the adjacent zones, particularly at the point of contact. For example, by "substantially free from any large pore zeolite", it is meant that the amount of large pore zeolite present in the outlet-end rear zone of the catalyst is from 0 to 0.1 g/in³, preferably from 0.001 to 0.01 g/in³.

Suitable amounts for the large pore zeolite (e.g. Beta zeolite) are from 0.05 to 2.0g/in³, preferably from 0.08 to 1.5g/in³, e.g. from 0.1 to 1 g/in³, from 0.2 to 0.8 g/in³ or from 0.3 to 0.5 g/in³.

Preferably the lower layer and the middle layer each extend along 100% of the length of the substrate. It is well known to form complete coatings and, where possible, this provides a processing efficiency.

Preferably the middle layer and/or the lower layer each have a uniform composition along 100% of the length of the substrate. This provides a processing efficiency.

Preferably the upper layer consists of the downstream portion, whereby in use the inlet-end front zone of the middle layer directly contacts the exhaust gas. In this embodiment the large pore zeolite is preferably provided in the inlet-end front zone of the lower layer. Placing the large pore zeolite only in the lower layer has been found to improve the storage efficiency at low temperature. Advantageously this also permits the use of less lanthana-doped alumina, which saves on costs, but also reduces the high temperature NOx storage (which is desirably not too high).

When the upper layer comprises the upstream portion, it is preferred that the upstream portion comprises the large pore zeolite. In these embodiments it is preferable that the lower layer has a uniform composition along 100% of the length of the substrate.

According to a further aspect there is provided an exhaust gas treatment system comprising the article as described herein.

Preferably the exhaust gas treatment system further comprises a downstream SCR component and, optionally, an electrical heater component and/or an injector for nitrogenous reductant arranged between the article and the SCR.

According to a further aspect there is provided a system comprising an engine and the exhaust gas treatment system as described herein.

According to a further aspect there is provided a method for the treatment of an exhaust gas, the method comprising passing an exhaust gas through the article as described herein, or through the exhaust gas treatment system as described herein.

The formation of washcoat layers as discussed above and comprising a PGM is well known in the art. This generally involves preparing a washcoat slurry. This involves mixing together a number of ingredients. The term "slurry" as used herein may encompass a liquid comprising insoluble material, e.g. insoluble particles. The slurry may comprise (1) solvent; (2) soluble content, e.g. free PGM ions (i.e. outside of the support); and (3) insoluble content, e.g. support particles. A slurry is particularly effective at disposing a material onto a substrate, in particular for maximized gas diffusion and minimized pressure drop during catalytic conversion. The slurry is typically stirred, more typically for at least 10 minutes, more typically for at least 30 minutes, even more typically for at least an hour. The stirring of the slurry may occur prior to disposing the slurry on the substrate, for example.

A first preferable ingredient in a washcoat slurry is a support material. Support materials are generally refractory metal oxide powders. It is preferred that the refractory metal oxide support material is selected from the group consisting of alumina, silica, zirconia, ceria and a composite oxide or a mixed oxide of two or more thereof, most preferably selected from the group consisting of alumina, silica and zirconia and a composite oxide or a mixed oxide of two or more thereof. Mixed oxides or composite oxides include silica-alumina and ceria-zirconia, most preferably silica-alumina. Preferably, the refractory metal oxide support material does not comprise ceria or a mixed oxide or composite oxide including ceria. More preferably, the refractory oxide is selected from the group consisting of alumina, silica and silica-alumina. The refractory oxide may be alumina. The refractory oxide may be silica. The refractory oxide may be silica-alumina.

The inclusion of a dopant may stabilise the refractory metal oxide support material or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof. In general, the dopant is different to the refractory metal oxide (i.e. the cation of the refractory metal oxide). Thus, for example, when the refractory metal oxide is titania, then the dopant is not titanium or an oxide thereof.

When the refractory metal oxide support material is doped with a dopant, then typically the refractory metal oxide support material comprises a total amount of dopant of 0.1 to 10 % by weight. It is preferred that the total amount of dopant is 0.25 to 7 % by weight, more preferably 2.5 to 6.0 % by weight. Preferably the dopant is silica, because oxidation catalysts comprising such support materials in combination with platinum group metals and alkaline earth metals promote oxidation reactions, such as CO and hydrocarbon oxidation.

Preferably the support material is selected from optionally doped alumina, silica, titania and combinations thereof.

A further ingredient in the washcoat is the PGM component, preferably a salt of the PGM components. Thus, the washcoat typically contains a palladium (Pd) salt and/or a platinum (Pt) salt. Preferably these salts are readily soluble in water. Preferably the Pd and Pt salts are independently selected from nitrates, chlorides and bromide. Preferably the washcoat slurry is Rh-free. Preferably the platinum-group metals present in the washcoat slurry consist of Pt and Pd.

Optional further ingredients which are conventional in forming washcoat slurries may also be present. These include one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

The slurry preferably has a solids content of from 10 to 40 %, preferably from 15 to 35 %. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate.

Forming a washcoat layer to obtain a coated substrate involves a step of applying the washcoat slurry to at least a portion of the substrate to form a washcoated substrate. Disposing the slurry on a substrate may be carried out using techniques known in the art. Typically, the slurry may be poured into the inlet of the substrate using a specific moulding tool in a predetermined amount, thereby disposing the loaded support material on the substrate. As discussed in more detail below, subsequent vacuum and/or air knife and/or and drying steps may be employed during the disposition step. When the support is a filter block, the loaded support material may be disposed on the filter walls, within the filter walls (if porous) or both.

The pH of the slurry may be adjusted using nitric acid or citric acid and optionally a base such as ammonia or barium hydroxide, before coating, in order to obtain the desired pH. Use of a base may be useful for ensuring that the pH is not adjusted to a pH that is too low.

The method then comprises subjecting the coated substrate to calcination. The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi: 10.1351/goldbook). The temperatures used in calcination depend upon the components in the material to be calcined and generally are between about 400°C to about 900°C for approximately 1 to 8 hours. In some cases, calcination can be performed up to a temperature of about 1200°C. In applications involving the processes described herein (i.e. conventional DOC preparation and the second heat treatment), calcinations are generally performed at temperatures from about 400°C to about 60°C for approximately 1 to 8 hours, preferably at temperatures from about 400°C to about 550°C for approximately 1 to 4 hours.

Calcination is typically carried out in an oven or furnace, more typically a belt or static oven or furnace, typically in hot air at a specific flow from one direction. Either step may also comprise an initial drying step. The drying and heat treatment steps may be continuous or sequential. For example, a separate washcoat may be applied after the substrate is already washcoated and dried with a previous washcoat. A washcoated substrate can also be dried and heat treated using one continuous heating program if coating is completed. During the heating, any complex that may have formed in the solution may at least partially, substantially or completely decompose. In other words, the ligands of such a complex, e.g. an organic compound, may be at least partially, substantially or completely removed or separated from the PGM ions, and may be removed from the final catalyst article. Particles of such separated palladium may then begin to form metal-metal and metal-oxide bonds. As a result of the heating (calcination), the substrate is typically substantially free of the organic compound, more typically completely free of the organic compound.

### Definitions

As used herein, the singular form of "a", "an" and "the" include plural references unless the context clearly dictates otherwise.

The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "on" is intended to mean "directly on" such that there are no intervening layers between one material being said to be "on" another material. Spatially relative terms, such as "below", "beneath", "lower", "above", "upper" and the like, may be used herein for ease of description to describe one element or feature's relationship to another element(s) or feature(s). It will be understood that the spatially relative terms are intended to encompass different orientations of the catalyst in use or operation in addition to the orientation depicted in the figures.

### Figures

The present invention will now be described further with reference to the following non limiting Figures, in which:
Figure 1 shows the layered and zoned configuration of Example 1.
Figure 2 shows the layered and zoned configuration of Example 2.

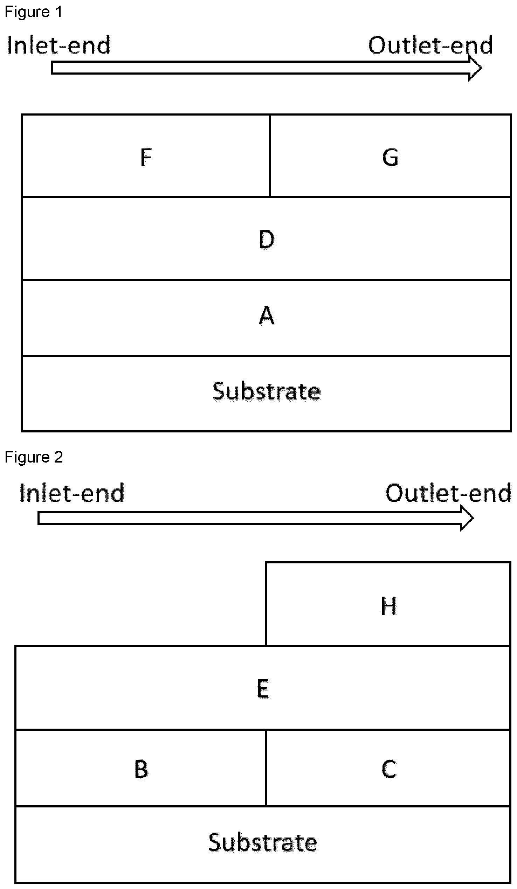

In Figures 1 and 2 the large arrow shows the direction of exhaust gas flow in use. The coating of zones B, C, H, G and F extends about 50% of the axial length of the substrate in the direction of this gas-flow.

### Examples

The invention will now be illustrated by the following non-limiting examples.

### Materials

All materials are commercially available and were obtained from known suppliers, unless noted otherwise.

### Example Preparation

### Preparation of [Al₂O₃.La₂O₃].Pt.Pd.[(CeO₂)] - Composition A

1.2 g/in³ [Al₂O₃.La₂O₃] was made into a slurry with distilled water and then milled to reduce the average particle size (d₉₀ = 10-14 µm). To the slurry, 21.25 g/ft³ Pt malonate and 3.75 g/ft³ Pd nitrate solution were added, and stirred until homogenous. The Pt/Pd was allowed to adsorb onto the support for 1 hour. To this slurry was added 0.3 g/in³ [(CeO₂)] and stirred until homogenous to form a washcoat. The washcoat was thickened with natural thickener (hydroxyethylcellulose).

### Preparation of [Al₂O₃.La₂O₃].Pt.Pd.[(CeO₂)] - Composition B

0.6 g/in³ [Al₂O₃.La₂O₃] was made into a slurry with distilled water and then milled to reduce the average particle size (d₉₀ = 10-14 µm). To the slurry, 21.25 g/ft³ Pt malonate and 3.75 g/ft³ Pd nitrate solution were added, and stirred until homogenous. The Pt/Pd was allowed to adsorb onto the support for 1 hour. To this slurry was added 0.3 g/in³ [Beta] and [(CeO₂)] and stirred until homogenous to form a washcoat. The washcoat was thickened with natural thickener (hydroxyethylcellulose).

### Preparation of [Al₂O₃.La₂O₃].Pt.Pd.[(CeO₂)] - Composition C

0.6 g/in³ [Al₂O₃.La₂O₃] was made into a slurry with distilled water and then milled to reduce the average particle size (d₉₀ = 10-14 µm). To the slurry, 21.25 g/ft³ Pt malonate and 3.75 g/ft³ Pd nitrate solution were added, and stirred until homogenous. The Pt/Pd was allowed to adsorb onto the support for 1 hour. To this slurry was added 0.3 g/in³ [(CeO₂)] and stirred until homogenous to form a washcoat. The washcoat was thickened with natural thickener (hydroxyethylcellulose).

### Preparation of [CeO₂.NdO].Pt.Pd] - Composition D

46.9 g/ft³ Pt Nitrate and 9.3 g/ft³ Pd nitrate solution were added to a slurry of 3 g/in³ [CeO₂.NdO], and stirred until homogenous. The Pt/Pd was allowed to adsorb onto the support for 1 hour. To this slurry was added 0.3 g/in³ alumina binder, and stirred until homogenous to form a washcoat. The washcoat was thickened with natural thickener (hydroxyethylcellulose).

### Preparation of [CeO₂.NdO].Pt.Pd] - Composition E

58.3 g/ft³ Pt Nitrate and 11.7 g/ft³ Pd nitrate solution were added to a slurry of 3 g/in³ [CeO₂] and 400 g/ft³ Neodymium nitrate, and stirred until homogenous. The Pt/Pd was allowed to adsorb onto the support for 1 hour. To this slurry was added 0.3 g/in³ alumina binder, and stirred until homogenous to form a washcoat. The washcoat was thickened with natural thickener (hydroxyethylcellulose).

### Preparation of [Beta].Pd - Composition F

Pd nitrate (7.5 gft⁻³) was added to a slurry of [Beta] (0.5 in⁻³), [Al₂O₃](0.067 gin⁻³) and binder (0.1 gin⁻³) in water. The Pt and was allowed to adsorb to the alumina support for 1 hour. The resultant slurry was made into a washcoat and thickened with natural thickener (hydroxyethylcellulose).

### Preparation of [Al₂O₃].Pt - Composition G

Pt nitrate (70 gft⁻³) was added to a slurry of [Al₂O₃](1.3 gin⁻³) in water. The Pt and was allowed to adsorb to the alumina support for 1 hour. The resultant slurry was made into a washcoat and thickened with natural thickener (hydroxyethylcellulose).

### Preparation of [CeO₂].Rh.Pt.Al₂O₃ - Composition H

Pt nitrate (50 gft⁻³) was added to a slurry of [Al₂O₃(1.3 gin⁻³) and citric acid (200 gft⁻³) in water. The Pt was allowed to adsorb to the alumina support for 1 hour. The resultant slurry was made into a washcoat and thickened with natural thickener (hydroxyethylcellulose).

### Catalyst 1

Each of washcoats A and D coated sequentially onto a ceramic or metallic monolith using standard coating procedures, dried at 100 °C and calcined at 500 °C for 45mins. This was followed by an 50% of length inlet dose of F and 50% outlet dose of G dried at 100 °C and calcined at 500 °C for 45mins. This is shown in Figure 1.

### Catalyst 2

Washcoats B and C were coated zoned onto a ceramic or metallic monolith using standard coating procedures, dried at 100 °C and calcined at 500 °C for 45mins. B was a 50% of length inlet dose and C was a 50% of length outlet dose. Washcoat E was coated and dried at 100 °C and calcined at 500 °C for 45mins, followed by an 50% outlet only dose of washcoat H and dried at 100 °C and calcined at 500 °C for 45mins. This is shown in Figure 2.

### Experimental results

Catalysts 1 and 2 were tested aged (hydrothermal ageing at 800°C for 16 hours). They were performance tested over NOx Saturation tests from empty and ramping down in a "pre-saturated" state, using a 1.6 litre bench mounted diesel engine. Emissions were measured pre- and post-catalyst.

### Example 1

The NOₓ storage efficiency for the first 0.3 g of Engine out NOx was measured of the catalysts when in the empty state. The results from one NOx saturation from empty test following an DPF soot regeneration precondition between each temperature run, are shown in Table 1 below.

**Table 1**

| **Temperature [°C]** | **NOx Storage Efficiency (%)** | |
|---|---|---|
| | *Catalyst 1* | *Catalyst 2* |
| 175 | 69.8 | 73.6 |
| 200 | 75.6 | 79.1 |
| 250 | 79.5 | 81.6 |
| 350 | 62.8 | 71.9 |

Both catalysts show good NOx storage efficiency. It can be seen from the results in Table 1 that Catalyst 2, comprising an exposed doped ceria front zone, exhibits increased NOx Storage Efficiency from the empty state.

### Example 2

The NOₓ storage efficiency for the first 0.3 g of Engine out NOx was measured of the catalysts when in "pre-saturated" state. The results from one NOx saturation test following an DPF precondition to start followed by ramping down to 350C then running a steady state test until the catalyst reaches saturation. The catalyst is then cooled to the next temperature point with another steady state test run until saturation. These steps are then repeated at the desired temperature points. Each temperature run, are shown in Table 2 below.

**Table 2**

| **Temperature [°C]** | **NOx Storage Efficiency (%)** | |
|---|---|---|
| | *Catalyst 1* | *Catalyst 2* |
| 350 | 56.5 | 56.5 |
| 300 | 51.1 | 54 |
| 250 | 43 | 40.3 |
| 200 | 29.2 | 34.6 |
| 175 | 25.8 | 29.2 |

Both catalysts show good NOx storage efficiency. It can be seen from the results in Table 2 that Catalyst 2, comprising an exposed doped ceria front zone, exhibits increased NOx Storage Efficiency at low temperature when in a pre-saturated state.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims and their equivalents.

## Claims

1. An article, for the treatment of exhaust gases, having an inlet-end front zone and an outlet-end rear zone and comprising a substrate coated with a zoned and layered catalyst, the catalyst comprising:
(i) a lower layer, on the substrate, comprising Platinum and Palladium, and an alumina support;
(ii) a middle layer, on the lower layer, comprising Platinum and Palladium, a ceria support and a NOx storage component;
(iii) an upper layer, on the middle layer, comprising a downstream portion in the outlet-end rear zone, comprising Platinum and an alumina support, and, optionally, an upstream portion in the inlet-end front zone, comprising Palladium and an alumina support;
wherein the inlet-end front zone of the catalyst comprises a large pore zeolite and wherein the outlet-end rear zone of the catalyst is substantially free from any large pore zeolite.

2. The article according to claim 1, wherein the lower layer and the middle layer each extend along 100% of the length of the substrate.

3. The article according to claim 1 or claim 2, wherein the middle layer has a uniform composition along 100% of the length of the substrate.

4. The article according to any preceding claim, wherein the upper layer consists of the downstream portion, whereby in use the inlet-end front zone of the middle layer directly contacts the exhaust gas.

5. The article according to claim 3, wherein the large pore zeolite is provided in the inlet-end front zone of the lower layer.

6. The article according to any of claims 1 to 3, wherein the upper layer comprises the upstream portion, and wherein upstream portion comprises the large pore zeolite.

7. The article according to claim 6, wherein the lower layer has a uniform composition along 100% of the length of the substrate.

8. The article according to any preceding claim, wherein the lower layer further comprises ceria, preferably in both the inlet-end front zone and an outlet-end rear zone.

9. The article according to any preceding claim, wherein the alumina support in the downstream portion of the upper layer is undoped alumina.

10. The article according to any preceding claim, wherein the alumina support in the lower layer is alumina doped with lanthanum.

11. The article according to any preceding claim, wherein the inlet-end front zone extends from 40 to 60% of a length of the substrate from the inlet end, and/or, wherein the outlet-end rear zone extends from 40 to 60% of a length of the substrate from the outlet end.

12. The article according to any preceding claim, wherein the substrate is a flow-through monolith, preferably a ceramic honeycomb monolith.

13. The article according to any preceding claim, wherein the large pore zeolite in the inlet-end front zone of the catalyst is Beta zeolite.

14. The article according to any preceding claim, wherein the NOx storage component comprises Nd and/or La.

15. An exhaust gas treatment system comprising the article according to any preceding claim.

16. The exhaust gas treatment system according to claim 15 and further comprising a downstream SCR component and, optionally, an electrical heater component and/or an injector for nitrogenous reductant arranged between the article and the SCR.

17. A system comprising an engine and the exhaust gas treatment system according to claim 15 or claim 16.

18. A method for the treatment of an exhaust gas, the method comprising passing an exhaust gas through the article according to any of claims 1 to 14, or through the exhaust gas treatment system according to claim 15 or claim 16.
